Europäisches Patentamt

European Patent Office

Office européen des brevets

(11) Publication number: **0 265 987 B1**

# EUROPEAN PATENT SPECIFICATION

(45) Date of publication of patent specification: **10.07.91** (51) Int. Cl.⁵: **G11B 15/56, B65H 20/24**

(21) Application number: **87201946.8**

(22) Date of filing: **09.10.87**

(54) Tape-transport device and tape-process apparatus provided with such a tape-transport device.

(30) Priority: **15.10.86 NL 8602585**

(43) Date of publication of application:
**04.05.88 Bulletin 88/18**

(45) Publication of the grant of the patent:
**10.07.91 Bulletin 91/28**

(84) Designated Contracting States:
**DE FR GB IT**

(56) References cited:
| | |
|---|---|
| CH-A- 440 743 | DE-A- 1 774 393 |
| DE-B- 1 154 690 | FR-A- 2 011 859 |
| US-A- 3 217 996 | US-A- 3 305 186 |
| US-A- 3 555 205 | US-A- 3 883 060 |
| US-A- 3 890 641 | US-A- 4 356 946 |

IBM TECHNICAL DISCLOSURE BULLETIN, vol.
13, no. 2, July 1970, page 393, New York, US;
D.E. FISK et al.: "Direct access tape file"

IBM TECHNICAL DISCLOSURE BULLETIN, vol.
21, no. 7, December 1978, pages 2692,2693,
New York, US; C.A. MILLIGAN et al.:
"Storage-buffered rotary actuating tape
drive"

(73) Proprietor: **N.V. Philips' Gloeilampenfabrieken
Groenewoudseweg 1
NL-5621 BA Eindhoven(NL)**

(72) Inventor: **Sastra, Budiman**
**c/o INT. OCTROOIBUREAU B.V. Prof. Holst-
laan 6**
**NL-5656 AA Eindhoven(NL)**
Inventor: **Renders, Martinus Adrianus**
**c/o INT. OCTROOIBUREAU B.V. Prof. Holst-
laan 6**
**NL-5656 AA Eindhoven(NL)**

(74) Representative: **Smit, Frederik Jan et al**
**INTERNATIONAAL OCTROOIBUREAU B.V.
Prof. Holstlaan 6
NL-5656 AA Eindhoven(NL)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

The invention relates to a tape-transport device comprising reel means with a rotatable reel on which a length of tape is wound, which tape, as it is unwound, is moved in its longitudinal direction away from the reel with a first speed ($n.V_0$), guide means over which the tape is movable to cooperate with process means of a tape-process apparatus, a second speed with which the tape moves over the guide means being variable in magnitude relative to the first speed, and buffer means comprising a buffer-control means which controls a tape buffer situated in the tape path between said reel and the guide means, the position of said tape buffer guide relative to the axis of rotation of the reel and the guide means being variable to change the length of the tape of the tape buffer, which results in the reel rotation being isolated from the movement of the tape over the guide means.

A tape-transport device of this type is known from US-A 3,217,996. During operation of this known device the buffer means control a tape buffer between the supply reel and the process means, enabling the process at the location of the process means to be carried out at a tape speed which differs from the unwinding speed of the tape. This enables, the tape transport past the process means to be effected with a varying speed and unwinding to be effected with a semi-stationary speed. Such a dynamic isolation of the reel movement from the contact of the tape with the process means is required in order to achieve that the inertia of the tape reel does not impair the drive of the portion of tape which is in contact with the process means. As the buffer means in the known tape-transport device comprise a tape control means constituted by rollers which are movable against spring force and a special drive system for the tape is provided, a comparatively large mass must be displaced in order to change the length of the tape in the tape buffer, which also gives rise to substantial friction between the tape control means and the tape. In the known tape-transport device this results in the variations in tape transport past the process means being effected with some delay and the changes in tape speed being subject to limitations. Further, the movable rollers form obstructions when the tape is threaded from the reel to the process means via the tape buffer.

In view of recent developments in the field of specific tape-process apparatuses, inparticular magnetic-tape video recording, it is desirable to provide such an isolation of the reel movement that a strongly varying speed of the tape past the process means is possible.

It is the object of the invention to achieve such a dynamic isolation between the reel movement and the tape movement past the prooess means in a tape-transport device of the type defined in the opening paragraph that strongly varying speeds of the tape past the process means can be obtained with a minimal delay.

To this end the invention is characterized in that the buffer means comprise an endless belt which is driven by drive means near the side facing the guide means with a speed corresponding to the second speed of the tape over the guide means, the buffer-control means comprises a guide section of the running belt between a tape entry point and a tape exit point, over the outer side of which guide section the length of tape of the tape buffer is passed, the length of the guide section when the belt is driven being variable to control the tape buffer over the tape-transport path from the entry to the exist point of the tape in such a way that the speed of the belt near the entry point of the tape corresponds to said first speed of the tape when it leaves the reel. Thus, changing the length of tape in the tape buffer requires only a relative displacement of the belt at the location of the guide section. In the case of a running belt in accordance with the invention the drive means need only move a part of the belt mass to and fro to control the length of tape in the tape buffer and to vary the tape speed. In this respect it is also advantageous that the actuator for this belt displacement may be combined with the drive for the belt movement to form a single belt-drive system. The foregoing, in conjunction with the effective low-friction contact of the tape with the guide section of the belt, provides a smooth and rapid control of the tape buffer and hence of the tape speed, the drive means being loaded in a favourable manner. Moreover, the tension in the length of tape in the buffer is maintained effectively. This results in an effective dynamic control of the system of forces occurring in the tape transport. Further advantages of the use of the belt are that it leads to a comparatively cheap and simple construction and that the tape can be threaded easily towards the process means via the guide section. For the latter aspect the movable arrangement of the belt may be an additional advantage. Suitably, the belt is made of, for example, phosphor bronze, which material readily recovers its original shape after deformation.

The tape-transport device in accordance with the invention can be used advantageously in tape-process apparatuses where an effective dynamic isolation from the reel movement is desired. A suitable example of such a process apparatus is a video recorder which scans digitally encoded signals on a magnetic tape by means of magnetic heads arranged on a head support. During recording each picture is divided into segments, each segment being recorded on the tape as a separate track. In the "search mode" (picture search) the magnetic heads must read a complete field at different search speeds. The large range of tape-speed variation provided by the tape-transport device in accordance with the invention enables a large length of tape with a plurality of segments to be scanned within one field interval in such a way that only the tape portion which is in contact with the heads is subject to a speed variation.

Another suitable example of such a process apparatus is a foil-winding arrangement used in the manufacture of foil capacitors.

A preferred embodiment of a tape-transport device in accordance with the invention is characterized in that as it is moved the endless belt is guided at its outer periphery between two guide elements which, viewed in the direction of tape transport, define the beginning and the end of the guide section of the belt and guide the tape towards and away from the guide section respectively. By guiding the periphery of the belt between guide elements which also guide the tape towards and away from the guide section a construction of the buffer means is obtained, which comprises a small number of parts, which enable an easy belt displacement to vary the length of the guide section, and which hinders threading of the tape to a minimal extent.

In this respect another preferred embodiment of a tape-transport device in accordance with the invention is characterized in that the guide section of the belt comprises an end portion which is bent through 180° and which adjoins two substantially parallel straight portions which each engage with a guide element at the outer side, the length of the guide section being variable by changing the position of the end portion in a direction parallel to the straight portions. As the belt comprises a portion which is bent through 180° and the relative displacement is obtained by a movement in a direction parallel to the straight portions only about half the belt mass has to be moved to and thro to vary the length of the guide section. This results in a rapid control of the tape buffer.

A further embodiment, in which the tape is moved between a supply reel and a take-up reel, is characterized in that the belt comprises at least two end portions which are bent through 180°, with a first and a second guide section for guiding the tape towards and away from the guide means respectively, the two guide sections being passed between guide elements which guide the tape. Thus, by the use of the belt tape buffers are obtained on both sides of the process means, which provide a satisfactory dynamic isolation with respect to both reels. Both at the side of the supply reel and at the side of the take-up reel the tape remains tensioned correctly even in the case of strongly varying tape speeds, whilst an effective dynamic control of the system of forces in the tape transport between the reels is obtained.

Yet another embodiment of the tape-transport device in accordance with the invention is characterized in that the belt comprises a third guide section with an end portion which is bent through 180°, which third guide section is situated between first and second guide means. This third guide section has the advantage that three tape buffers can be obtained by means of one continuous belt, enabling the tape to be moved with locally varying speeds past two separately arranged process means with the aid of a minimal number of parts.

An embodiment in which the process means comprise a head support carrying at least one magnetic head for scanning information on a magnetic tape and in which the magnetic head is in contact with a coating side of the tape, is characterized in that the tape exclusively contacts the guide sections of the belt with its base side. Thus, the vulnerable coating side of the tape is not in contact with the guide section of the belt, which is advantageous for a satisfactory reproduction quality and for the life of the magnetic tape.

In this respect another embodiment of a tape-transport device in accordance with the invention is characterized in that the two reels are situated in a tape cassette, whose housing is provided with two tape guides at the front corners between which tape guides a tape portion is tensioned when the cassette is not in operation, which housing has a recess behind said tape portion, which recess has such a shape that the endless belt can be positioned in said recess, after which threading means of the tape-transport device can extract the tape portion and the belt from the cassette in the direction of the guide means to bring them into an operating position. This has the advantage that during loading of the cassette the cassette housing can be placed over the belt with its recess, so that during threading of the magnetic tape the belt does not obstruct the displacement of the tape and during the threading movement towards the operating position the belt is readily movable to a position between the guide elements.

In this respect a further embodiment of a tape-transport device is characterized in that the process means comprise two head supports which rotate about an axis, the tape being guided past said supports via the first and the second guide means respectively, which supports are radially spaced from each other, the third guide section controlling a tape buffer in the tape path between the first and the second head support and the head of each head support scanning a corresponding half of the tape width. By the use of a plurality of tape buffers which are coupled only sequentially to one another, it is possible to employ a system with two rotating head supports in a video recorder, enabling a smooth transition between pictures to be obtained in the "picture search" mode. In this case no special picture-storage memory is needed. Since the heads on the head support scan only half the tape width so-called "pitch angle" for a given track length can be halved.

A further preferred embodiment of a tape-transport device in accordance with the invention, in which the drive means comprise a capstan and a pressure roller, is characterized in that the capstan in conjunction with the pressure roller directly drives the belt at the location of a guide element situated near the point where the tape enters the second guide section. Thus, the central drive of the belt may be combined with the guide function of one of the guide elements.

Yet another preferred embodiment of a tape-transport device in accordance with the invention is characterized in that the drive means drive the belt directly by means of a linear drive. This linear drive, where the belt may act as a kind of rotor, has the advantage that only the masses of half the belt and a tape portion around the process means need be accelerated and decelerated.

The invention further relates to a tape-process apparatus comprising process means. The tape-process apparatus in accordance with the invention is also provided with the tape-transport device.

Embodiments of the invention will now be described in more detail, by way of example, with reference to the accompanying drawings. In the drawings:

Fig. 1 is a diagrammatic plan view of a tape-transport device in accordance with the invention, in which the tape is moved past process means of a tape-process apparatus,

Fig. 2 is a graph representing the tape-transport speed during tape transport from the reel past the process means;

Fig. 3 is a plan view illustrating a first stage of the tape-threading operation in a second embodiment of a tape-transport device in accordance with the invention;

Fig. 4 illustrates a second stage of the tape-threading operation in the tape-transport device shown in Fig. 3;

Fig. 5 is a plan view of the buffer means, the belt being driven directly by a capstan;

Fig. 6 is a diagrammatic plan view, similar to that of Fig. 1, of a third embodiment of a tape-transport device in accordance with the invention comprising two sets of process means;

Fig. 7 is a graph of the tape-transport speed during the tape transport past the process means in the embodiment shown in Fig. 6;

Fig. 8 diagrammatically represents the track configuration on the tape for the tape-transport device shown in Fig. 6;

Fig. 9 diagrammatically shows the arrangement of two sets of process means relative to the tape to be scanned for the tape-transport device shown in Fig. 6;

Fig. 10 is a plan view of the buffer means in a further embodiment of a tape-transport device in accordance with the invention, employing a linear belt drive.

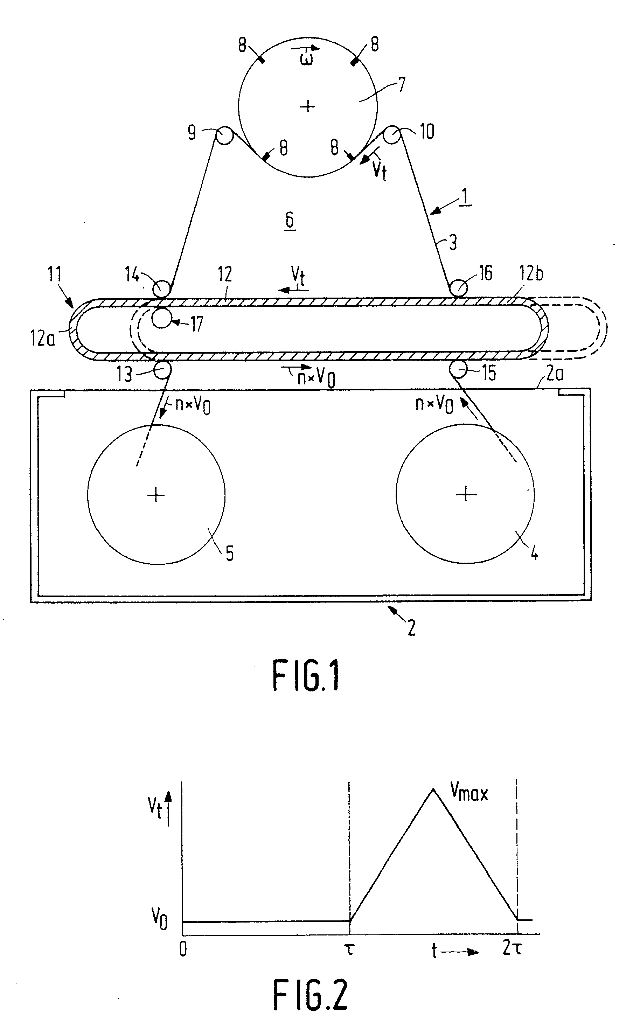

The tape-transport device shown in Fig. 1 cooperates with a magnetic tape 3 contained in a cassette 2, which tape is wound on a supply reel 4 and a take-up reel 5 inside a cassette housing. Together the rotatable reels 4 and 5 constitute reel means, which after the cassette 2 has been loaded into a tape-process apparatus 6 comprising the tape-transport device 1 can be driven by the device 1 in a manner, not shown.

The tape-process device 6, in the present example a video recorder, comprises process means including a scanner, comprising a rotatable head support 7, carrying a plurality of magnetic heads 8 at its periphery. To the left and right of the head support 7 guide means are arranged on a deck plate, not shown, of the apparatus 6, which means comprise guide rollers 9 and 10. After threading these rollers guide the tape 3 in such a way relative to the inclined head support 7 that during operation the tape can be scanned along tracks which are inclined relative to the lateral direction of the tape.

Between the head support 7 and the cassette 2 buffer means 11 are arranged, which buffer means comprise an endless belt 12 which at its outer periphery is guided between guide elements 13, 14, 15 and 16 on the deck plate, not shown. These elements are constructed as guide rollers and guide the tape 3 relative to the belt 12 near entry and exit locations of the tape, which locations also constitute the beginning and the end respectively of the guide sections 12a and 12b of the belt 12.

In the guide sections 12a and 12b the belt 12, which is for example made of phosphor bronze, comprises end portions which are bent through 180°, which portions adjoin straight portions which extend substantially parallel to each other and which are situated between the guide rollers 13 and 14 at the left and between the guide rollers 15 and 16 at the right.

As is indicated in broken lines, the running belt 12 can be subjected to a relative displacement which, as a result of the presence of the guide rollers 13-16, is directed parallel to the straight portions of the belt and suitably parallel to a front wall 2a of the cassette 2. This displacement enable the length of the guide sections 12a and 12b to be varied, which is attended by a change in length of the portions of the tape guided over the belt. As a result of the use of the belt 12 this change in length is complementary, i.e. the length reduction at one side of the belt is equal to the length increase at the other side. This has the advantage that between the reels 4 and 5 the tape always remains taut at constant tape take-up and tape-supply speeds.

Thus, the guide sections 12a and 12b constitute tape buffers which enable the speed ($V_t$) of the tape past the head support during rotation of the head support (angular velocity $\omega$) to be varied strongly in the case of semi-stationary winding speed of the reels 4 and 5. The speed $V_t$ is obtained by the use of drive means arranged on the deck plate, which means comprise a capstan and pressure-roller combination 17, the capstan of this combination coinciding with the guide roller 14 and driving the belt 12 and the tape 3. In this respect it is important that, regardless of the magnitude of the speed $V_t$, the belt 12 moves with said semi-stationary speed near the point where the tape 3 enters the guide section 12b.

For guiding the tape it advantageous that the tape 3 moves over the guide sections 12a and 12b with its base side, so that the coating side of the tape, which side is scanned by the heads 8, only moves over the rollers 13-16.

The video recorder constituting the tape-process apparatus 6 in the present example scans digitally encoded video signals on the magnetic tape 3 by means of the heads 8. In such a system each video picture is divided into a plurality of segments, each segment being recorded on the tape as a separate track. The resulting short tracks enable the diameter and wrapping angle of the scanner, comprising the head support 7, to be reduced. However, in the "picture search" mode it is not possible to read a complete picture at different searching speeds using the available standard technologies.

By means of the tape-transport device 1 tape transport can be effected at strongly varying speeds; this method of tape transport provides a solution to said problem encountered in the "picture search" mode. when a normal standard-playing speed $V_o$ is adopted a comparatively large length of tape is moved past the scanner within one field interval in the "picture search" mode whilst a semi-stationary reel speed ($n.V_o$) is maintained. The speed variation is illustrated in the graph shown in Fig. 2. In this graph:

| | |
|---|---|
| t | = time |
| $\tau$ | = field interval |
| $V_o$ | = reproduction playing speed |
| $V_t$ | = speed at scanner |
| $V_{max}$ | = $(4n-3)*V_o$ |

| | |
|---|---|
| n | = speed factor. |

For example: $\tau$ = 20 ms, n = 10 and $V_o$ = 2 cm/s.

The desired variation in tape speed is necessary only for the portion of the tape which is contact with the scanner. During this variation the reels may be driven at the semi-stationary speed (for example $n.V_o$). Such a dynamic isolation of the reels 4 and 5 relative to the tape-head contact has the advantage that the inertia of the reels does not impair the drive of the portion of the tape which is in contact with the heads. Thus, the desired isolation is obtained by means of the buffers in the tape path.

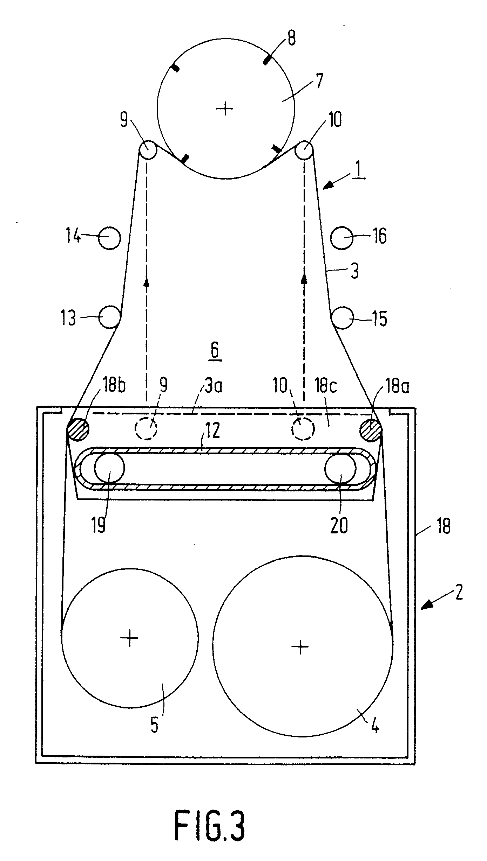

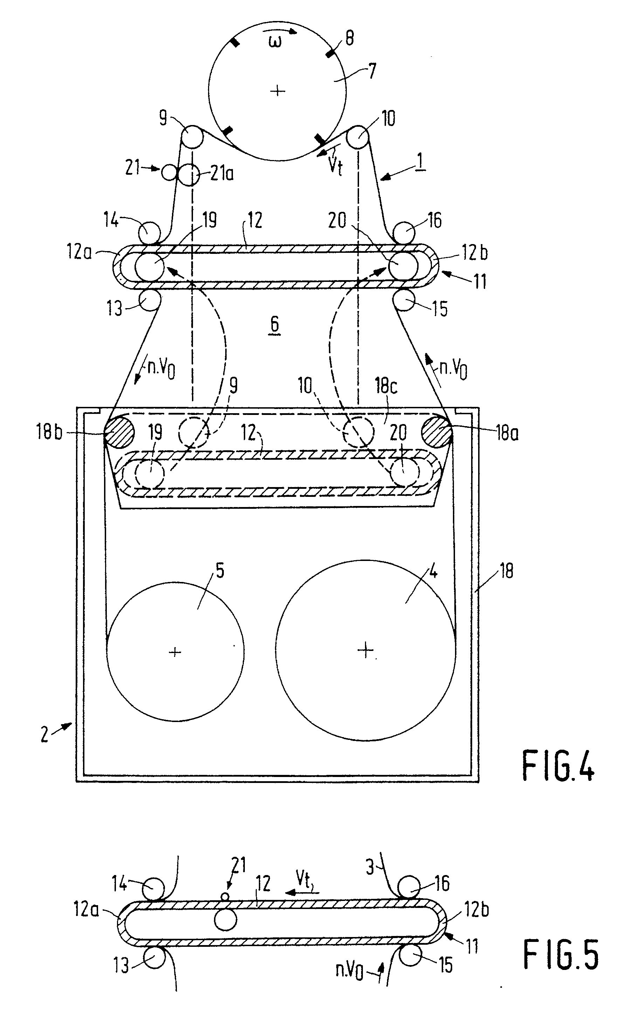

The parts in the example shown in Figs. 3 and 4 are constructed in the same way as those in Fig. 1, only the housing 18 of the cassette 2 has a different shape. At the front of the housing 18 near the corners tape guides 18a, 18b are arranged between which a length of tape 3a is tensioned when the cassette is not in operation. Behind tape portion 3a a recess 8c is formed in the housing 18. If the cassette is situated outside the tape-process apparatus 6, the tape portion 3a and the recess 18c can be covered by means of a cassette shutter, not shown. The cassette 2, which is only shown diagrammatically, is for example of the "8 mm video" or "R-DAT" type. An example of a cassette of the first type is disclosed in EP-A-91, 171 and an example of the second type is disclosed in EP-A-162,487. After the tape-process apparatus has been loaded and the shutters have been opened the recess 18c enables the belt 12 and the guide rollers 9 and 10 to engage behind the tape portion 3a. By arranging the guide rollers 9 and 10 on threading means, not shown, of the tape-transport device the tape portion 3a can be drawn out of the housing 18 without being obstructed by the belt 12 and can be wrapped around the scanner (Fig. 3). Immediately after this, the belt 12 can be extracted from the housing 18. For this purpose pins 19 and 20 of the threading means are used, which pins are arranged on pivotal arms, not shown, to enable these pins 19 and 20 to be moved along paths shown in Fig. 4. During this movement the belt 12 is pulled out of the housing 18 between the tape guides 18a and 18b and is positioned between the guide elements 13-16. As the belt is deformable it can readily be positioned between the pairs of elements 13, 14 and 15, 16, the tape 3 being wrapped around the guide sections 12a and 12b without any special operations. In the operating position the belt 12 is clear of the pins 19 and 20. In the present example the drive is provided by a capstan and pressure-roller combination 21, which is situated between the guide rollers 9 and 14 and which drives the tape 3. In order to enable threading the pressure roller 21a is movable in, for example, an axial direction. Alternatively, the pressure roller 21a together with the guide roller 9 can be moved out of the recess 18c with the threading means. As a result of its contact with the guide section 12a the tape 3 drives the belt 12 near the guide roller 14 with the speed $V_t$. The further operation of the tape-transport device 1 in conjunction with the tape-process apparatus 6 proceeds in the same way as in the first embodiment.

During threading out the pins 19 and 20 first return the belt 12 into the recess 18c, after which the tape 3 is returned into the cassette 2.

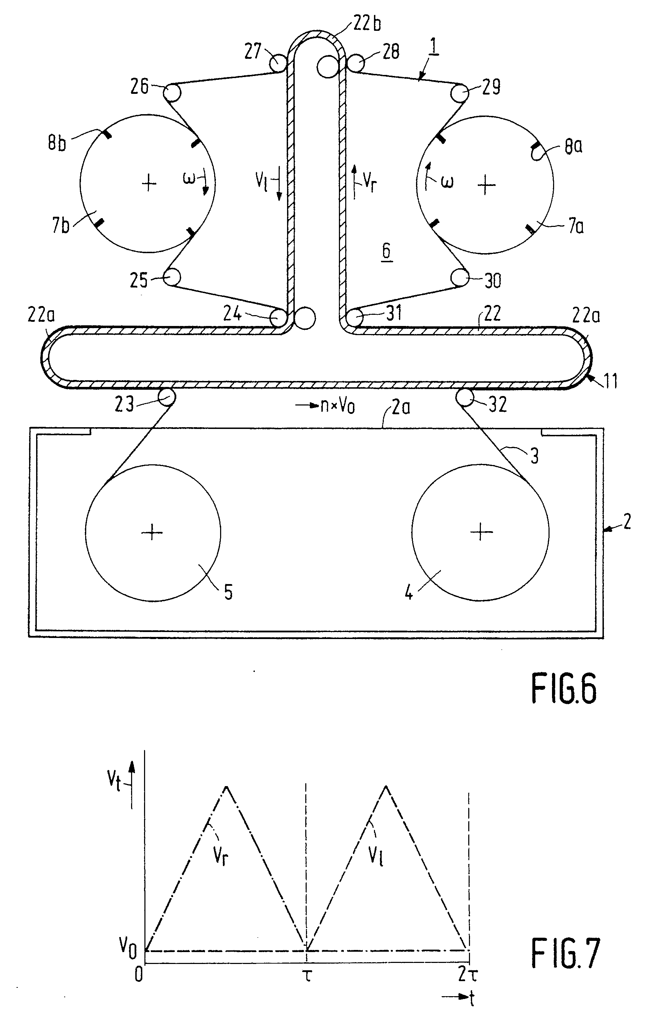

Fig. 5 illustrates an alternative method by means of which the belt 12 can be driven directly by a capstan and pressure-roller combinations 21 arranged between the guide rollers 14 and 16. The belt 12 now moves the tape 3 with a variable speed $V_t$ past the process means 7 via the guide section 12a. Thus, it is obvious that the belt 12 can be driven in conjunction with one of the guide rollers (Fig. 1), or via the drive of the tape 3 (Fig. 3,4), or directly (Fig. 5), whilst maintaining the said advantages with respect to the isolation of the reel movements relative to the movement of the tape past the scanner.

It is to be noted that in the embodiment shown in Figs. 1-5 the tape-process apparatus 6 should be provided with a picture-storage memory in order to repeat the preceding picture on the screen during acceleration and deceleration of the tape 3 at the scanner. During a picture reproduction mode at a faster rate, depending on the speeds associated with this mode, a certain intermittent effect may occur in the same way as with motion pictures (at 24 or 18 frames per second).

The embodiment shown in Fig. 6 does not require the use of a picture-storage memory. This is possible by the use of buffer means comprising three tape buffers. For this purpose a belt 22 is guided between guide elements 23-32 at its outer periphery in a T-shaped configuration. From the reel 4 the tape 3 is passed via a guide section 22a, constituting a tape buffer similar to that of the guide section 12b in Fig. 1. Subsequently, the tape moves past the first process means 7a comprising heads 8a with a variable speed $V_r$, the first guide means comprising guide rollers 29 and 30. From a guide roller 28 the tape 3 moves over a guide section 22b, which defines a further tape buffer, to a guide roller 27. Subsequently, the tape moves via second guide means comprising guide rollers 25 and 26 past second process means 7b comprising heads 8b with a variable speed $V_1$. Finally, in the same way as in the guide section 12b in Fig. 1, the tape 3 moves via guide rollers 23 and 24 past a guide section 22c, where another tape buffer is situated, towards the take-up reel 5. The belt 22 is driven at two points, at the point where the tape 3 enters the belt 22, i.e. near the guide roller 28 and near the guide roller 24, so that different speeds $V_r$ and $V_1$ are possible.

By the use of two radially spaced rotating head supports 7a and 7b a double "scanner" system obtained in the tape-process apparatus 6, ensuring that a gradual transition between pictures during "picture search" is obtained without the use of a picture memory by alternately reading by means of the two scanners.

Fig. 7 is a graph illustrating the tape speed variation similar to that shown in Fig. 2. The dashed line represents the speed $V_1$ and the dash-dot line the speed $V_r$.

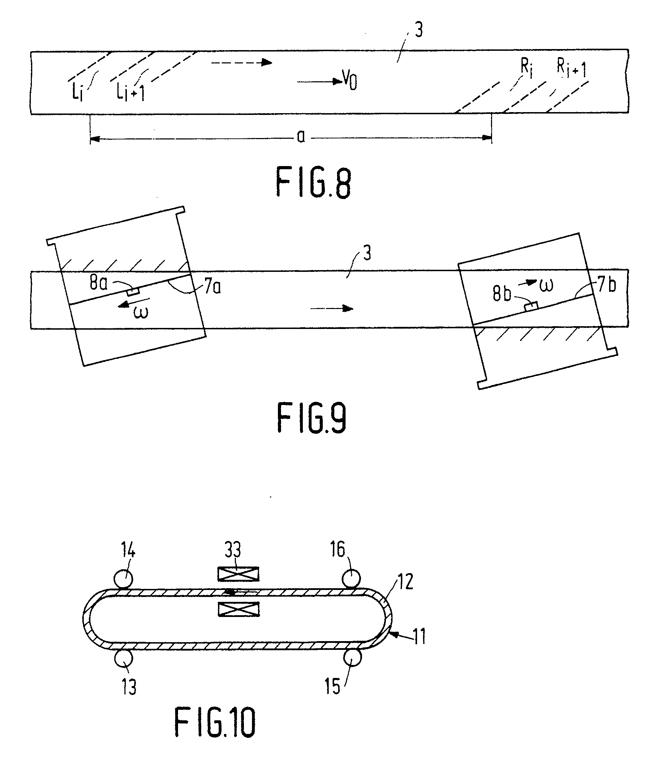

It is to be noted that in the present embodiment a special "format" is necessary for the track configuration on the tape 3 (Fig. 8). A pattern is adopted such that each head support 7a, 7b scans only half the tape width. In Fig. 8 "a" indicates the distance between the scanner head-supports 7a and 7b, whilst:

$L_i$ = track packet from the scanner 7b corresponding to the $i^{th}$ picture

$R_i$ = track packet from the scanner 7a corresponding to the $i^{th}$ picture.

Since each scanner 7a, 7b only scans half the tape width the "pitch angle" can be halved for a given track length.

A suitable embodiment of such a tape-process apparatus is shown in Fig. 9, where a tape 3 of 8 mm width is used in conjunction with two R-DAT scanners 7a, 7b. For the construction of an R-DAT scanner, reference is made to EP-A-197,602. Furthermore, such an 8 mm double R-DAT system may be rendered "backward compatible" with a standard R-DAT system by threading the tape 3 over only one scanner.

The embodiment shown in Fig. 10 is an alternative for the drive means of the belt 2. Here a drive motor 33 is provided, which cooperates with the belt 12 as a "rotor". The advantage of this linear drive, compared with a capstan system in which the rotating mass inertia acts as an additional load during acceleration and deceleration, is that only the mass of half the belt 12 and a portion of the tape which is wrapped around the scanner has to be accelerated and decelerated.

Some uses of the tape-transport device 1 in accordance with the invention in tape-process apparatuses employed in magnetic recording are:

1. picture search in segmented helical-scan video systems;

2. picture search in multi-track linear-scan systems;

3. random-access in data recording, i.e. a combination of floppy + streamer;

4. very accurate stationary systems where it is required to isolate mechanical disturbances from the reels with respect to the capstan transport system, such as professional recorders.

It is to be noted that in principle a large variety of uses are conceivable for the tape-process apparatus 6 using the tape-transport device in accordance with the invention. For example, the apparatus 6 may be a foil-winding arrangement for the manufacture of foil capacitors, where it is also required to provide a dynamic isolation of the reel movement. In such cases the take-up reel 5 may be dispensed with and the term "tape" should read "foil", "film", "sheet" etc.

## Claims

1. A tape-transport device comprising:
   - reel means with a rotatable reel (4) on which a length of tape (3) is wound, which tape, as it is unwound, is moved in its longitudinal direction away from the reel with a first speed $(n.V_o)$ (4);
   - guide means (9,10) over which the tape (3) is movable to cooperate with process means (7) of a tape-process apparatus (6), a second speed $(V_t)$ with which the tape moves over the guide means (9, 10) being variable in magnitude relative to the first speed; and
   - buffer means (11) comprising a buffer-control means which control a tape buffer situated in the tape path between said reel (4) and the guide means (9, 10), the position of said tape buffer relative to the axis of rotation of the reel (4) and the guide means (9, 10) being variable to change the length of the tape of the tape buffer, which results in the reel rotation being isolated from the movement of the tape over the guide means (9, 10), characterized in that
   - the buffer means (11) comprise an endless belt (12; 22) which is driven by drive means (17; 21) near the side facing the guide means (9, 10) with a speed $(V_t)$ corresponding to the second speed of the tape (3) over the guide means (9, 10),
   - the buffer-control means comprises a guide section (12b) of the running belt (12; 22) between a tape entry point and a tape exit point, over the outer side of which guide section (12b) the length of tape of the tape buffer is passed, the length of the guide section (12b) when the belt (12; 22) is driven being variable to control the tape buffer over the tape-transport path from the entry to the exit point of the tape (3) in such a way that the speed of the belt (12; 22) near the entry point of the tape corresponds to said first speed $(n.V_o)$ of the tape when it leaves the reel (4).

2. A tape-transport device as claimed in Claim 1 characterized in that as it is moved the endless belt (12; 22) is guided at its outer periphery between two guide elements (15, 16) which, viewed in the direction of tape transport, define the beginning and the end of the guide section (12b) of the belt and guide the belt towards and away from the guide section (12b) respectively.

3. A tape-transport device as claimed in Claim 2, characterized in that the guide section (12b) of the belt (12; 22) comprises an end portion which is bent through 180° and which adjoins two substantially parallel straight portions, which each engage with a guide element (9, 10) at the outer side, the length of the guide section (12b) being variable by changing the position of the end portion in a direction parallel to the straight portions.

4. A tape-transport device as claimed in Claim 3, in which the tape is moved between a supply reel (4) and a take-up reel (5), characterized in that the belt (12; 22) comprises at least two end portions which are bent through 180°, with a first (12b) and a second (12a) guide section for guiding the tape towards and away from the guide means (9, 10) respectively, the two guide sections (12a, 12b) being passed between guide elements (13-16) which guide the tape (3).

5. A tape-transport device as claimed in Claim 4, characterized in that the belt (22) comprises a third guide section (22b) with an end portion which is bent through 180°, which third guide section is situated between first (29, 30) and second (25, 26) guide means.

6. A tape-transport device as claimed in Claim 4 or 5, in which the process means comprise a head support (7) carrying at least one magnetic head (8) for scanning information on a magnetic tape and in which the magnetic head (8) is in contact with a coating side of the tape (3), characterized in that the tape (3) exclusively contacts the guide sections (12a, 12b) of the belt (12) with its base side.

7. A tape-transport device as claimed in Claim 6 characterized in that the two reels (4,5) are situated in a tape cassette (2), whose housing (18) is provided with two tape guides (18a, 18b) at the front corners, between which tape guides a tape portion (3a) is tensioned when the cassette (2) is not in operation, which housing (18) has a recess behind said tape portion (3a), which recess has such a shape that the endless belt (12) can be positioned in said recess, after which threading means of the tape-transport device (1) can extract the tape portion (3a) and the belt (12) from the cassette (2) in the direction of the drive means (9, 10) to bring them into an operating position.

8. A tape-transport device as claimed in Claim 5 in combination with Claim 6 or 7, characterized in that the process means comprise two head supports (7a, 8b) which rotate about an axis, the tape (3) being guided past said supports via the first (29, 30) and second (25, 26) guide means respectively, which supports are radially spaced from each other, the third guide section (22b) controlling a tape buffer in the tape path between the first (7a) and the second head support (7b) and the head (8a, 8b) of each head support (7a, 7b) scanning a corresponding half of the tape width.

9. A tape-transport device as claimed in any one of the Claims 4 to 8, in which the drive means comprise a capstan and a pressure roller, characterized in that the capstan (17) in conjunction with the pressure roller directly drives the belt (12) at the location of a guide element (14) situated near the point where the tape (3) enters the second guide section (12a).

10. A tape-transport device as claimed in any one of the Claims 1 to 8, characterized in that the drive means drive the belt (12) directly by means of a linear drive (33).

11. A tape-process apparatus, characterized in that said apparatus (6) comprises a tape-transport device (1) as claimed in Claim 1.

**Revendications**

1. Dispositif de transport de bande comprenant :
   - un équipage de bobines comportant une bobine rotative (4) sur laquelle une longueur de bande (3) est envidée, cette bande, lorsqu'elle est dévidée, s'éloignant, dans le sens de sa longueur, de la bobine à une première vitesse $(n.V_0)$ (4);
   - des moyens de guidage (9, 10) sur lesquels la bande (3) peut défiler pour coopérer avec un moyen de traitement (7) d'un appareil de traitement de bande (6),

une seconde vitesse $(V_t)$ à laquelle la bande défile sur les moyens de guidage (9, 10) étant variable par rapport à la première vitesse, et
   - des moyens à tampons (11) comprenant un moyen de commande de tampon qui commande un tampon de bande situé dans le trajet de la bande entre la bobine (4) et les moyens de guidage (9, 10), la position du tampon de bande par rapport à l'axe de rotation de la bobine (4) et aux moyens de guidage (9, 10) étant variable pour modifier la longueur de la bande du tampon de bande, avec pour résultat que la rotation de la bobine est isolée du défilement de la bande sur les moyens de guidage (9, 10),
   caractérisé en ce que
   - les moyens à tampons (11) comprennent une courroie sans fin (12; 22) qui est entraînée par un moyen d'entraînement (17; 21) situé à proximité du côté faisant face aux moyens de guidage (9, 10), à une vitesse $(V_t)$ correspondant à la seconde vitesse de la bande (3) sur les moyens de guidage (9, 10);
   - le moyen de commande de tampon comprend une section de guidage (12b) de la courroie en mouvement (12; 22), entre un point d'entrée de bande et un point de sortie de bande, la longueur de bande du tampon de bande passant sur la face extérieure de cette section de guidage (12b) dont la longueur, lorsque la courroie (12; 22) est entraînée, est variable pour régler le tampon de bande sur le trajet de transport de la bande du point d'entrée au point de sortie de la bande (3), d'une manière telle que la vitesse de la courroie (12; 22), à proximité du point d'entrée de la bande, corresponde à la première vitesse $(n.V_0)$ de la bande lorsqu'elle quitte la bobine (4).

2. Dispositif de transport de bande suivant la revendication 1, caractérisé en ce que, lorsqu'elle est déplacée, la courroie sans fin (12; 22) est guidée, au niveau de sa périphérie extérieure, entre deux éléments de guidage (15, 16) qui, vu dans le sens du transport de bande, définissent le début et la fin de la section de guidage (12b) de la courroie et guident la courroie respectivement vers et depuis la section de guidage (12b).

3. Dispositif de transport de bande suivant la revendication 2, caractérisé en ce que la section de guidage (12b) de la courroie (12; 22) comprend une partie d'extrémité qui est incurvée à 180° et qui se fond dans deux parties rectilignes en substance parallèles qui attaquent chacune un élément de guidage (9, 10) disposé du côté extérieur, la longueur de la section de guidage (12b) pouvant varier sous l'effet d'une modification de la position de la partie d'extrémité dans un sens parallèle aux parties rectilignes.

4. Dispositif de transport de bande suivant la revendication 3, dans lequel la bande est déplacée entre une bobine débitrice (4) et une bobine réceptrice (5), caractérisé en ce que la courroie (12; 22) comprend au moins deux parties d'extrémité qui sont incurvées à 180°, avec une première (12b) et une seconde (12a) section de guidage pour guider la bande respectivement vers et depuis les moyens de guidage (9, 10), les deux sections de guidage (12a, 12b) passant entre des éléments de guidage (13-16) qui guident la bande (3).

5. Dispositif de transport de bande suivant la revendication 4, caractérisé en ce que la courroie (22) comprend une troisième section de guidage (22b) avec une partie d'extrémité qui est incurvée à 180°, cette troisième section de guidage étant située entre un premier (29, 30) et un second (25, 26) moyen de guidage.

6. Dispositif de transport de bande suivant la revendication 4 ou 5, dans lequel les moyens de traitement comprennent un porte-têtes (7) supportant au moins une tête magnétique (8) pour balayer de l'information sur une bande magnétique et dans lequel la tête magnétique (8) est en contact avec une face de la bande (3) pourvue d'un revêtement, caractérisé en ce que la bande (3) vient exclusivement en contact avec les sections de guidage (12a, 12b) de la courroie (12) par sa face de base.

7. Dispositif de transport de bande suivant la revendication 6, caractérisé en ce que les deux bobines (4, 5) sont situées dans une cassette de bande (2), dont le boîtier (18) est pourvu de deux guides de bande (18a, 18b) aux coins antérieurs, entre lesquels une partie de bande (3a) est tendue lorsque la cassette (2) n'est pas en fonctionnement, ce boîtier (18) présentant un évidement derrière la partie de bande (3a), dont la forme est telle que la courroie sans fin (12) puisse y être placée, après quoi des moyens de mise en place du dispositif de transport de bande (1) peuvent extraire la partie de bande (3a) et la courroie (12) hors de la cassette (2), en direction des moyens de guidage (9, 10), pour les amener dans une position active.

8. Dispositif de transport de bande suivant la revendication 5 en combinaison avec la revendication 6 ou 7, caractérisé en ce que les moyens de traitement comprennent deux porte-têtes (7a, 8b) qui tournent autour d'un axe, la bande (3) étant guidée en regard des porte-têtes par l'intermédiaire respectivement du premier (29, 30) et du second (25, 26) moyen de guidage, ces porte-têtes étant espacés radialement l'un de l'autre, la troisième section de guidage (22b) réglant un tampon de bande dans le trajet de la bande entre le premier (7a) et le second (7b) porte-tête et la tête (8a, 8b) de chaque porte-tête (7a, 7b) balayant une moitié correspondante de la largeur de la bande.

9. Dispositif de transport de bande suivant l'une quelconque des revendications 4 à 8, dans lequel les moyens d'entraînement comprennent un cabestan et un galet presseur, caractérisé en ce que le cabestan (17), conjointement avec le galet presseur, entraîne directement la courroie (12) à l'endroit d'un élément de guidage (14) situé à proximité du point où la bande (3) pénètre dans la seconde section de guidage (12a).

10. Dispositif de transport de bande suivant l'une quelconque des revendications 1 à 8, caractérisé en ce que les moyens d'entraînement entraînent la courroie (12) directement au moyen d'un entraînement linéaire (33).

11. Appareil de traitement de bande, caractérisé en ce qu'il (6) comprend un dispositif de transport de bande (1) suivant la revendication 1.

**Ansprüche**

1. Bandtransportvorrichtung mit:
   - Haspelmiteln mit einer drehbaren Haspel (4), auf der ein Bandteil (3) gewickelt ist, wobei das Band beim Abwickeln in der Längsrichtung weg von der Haspel mit einer ersten Geschwindigkeit (n. $V_0$) (4) bewegt wird;
   - Führungsmitteln (9, 10), über die das Band (3) zum Zusammenarbeiten mit Bearbeitungsmitteln (7) einer Bandbearbeitungsvorrichtung (6) beweglich ist, wobei eine zweite Geschwindigkeit ($V_t$, mit der das Band sich über die Führungsmittel (9, 10) bewegt, gegenüber der ersten Geschwindigkeit in ihrer Größe veränderlich ist; und

- Puffermitteln (11) mit einem Puffersteuermittel, das ein Bandpuffer steuert, das in der Bandstrecke zwischen der genannten Haspel (4) und den Führungsmitteln (9, 10) liegt, wobei die Lage des genannten Bandpuffers gegenüber der Drehungsachse der Haspel (4) und den Führungsmitteln (9, 10) zum Ändern des Bandteils des Bandpuffers veränderlich ist, was zu einer Entkopplung der Haspeldrehung von der Bandbewegung über die Führungsmittel (9, 10) führt, dadurch gekennzeichnet, daß

- die Puffermittel (11) einen endlosen Riemen (12; 22) aufweisen, der mittels Antriebsmittel (17; 21) in der Nähe der den Führungsmitteln (9, 10) zugewandten Seite mit einer der zweiten Geschwindigkeit des Bandes (3) über die Führungsmittel (9, 10) entsprechenden Geschwindigkeit ($V_t$)angetrieben wird,

- die Puffersteuermittel zwischen einem Bandeingangspunkt und einem Bandausgangspunkt einen Führungsteil (12b) des umlaufenden Riemens (12; 22) aufweisen, wobei über die Außenseite dieses Führungsteils (12b) der Bandteil des Bandpuffers geführt wird, wobei während des Antriebs des Riemens (12; 22) die Länge des Führungsteils (12b) veränderlich ist und zwar zur Steuerung des Bandpuffers über die Bandtransportstrecke von dem Eingangs- zu dem Ausgangspunkt des Bandes (3) derart, daß die Geschwindigkeit des Riemens (12; 22) bei dem Eingangspunkt des Bandes der genannten ersten Geschwindigkeit ($n.V_0$) des die Haspel (4) verlassenden Bandes entspricht.

2. Bandtransportvorrichtung nach Anspruch 1, dadurch gekennzeichnet, daß der endlose Riemen (12; 22) beim Umlaufen am Außenumfang zwischen zwei Führungselementen (15, 16) geführt wird, die in der Bandtransportrichtung gesehen, den Anfang und das Ende des Führungsteils (12b) des Riemens bestimmen und den Riemen zu dem Führungsteil (12b) hin bzw. weg von demselben führen.

3. Bandtransportvorrichtung nach Anspruch 2, dadurch gekennzeichnet, daß der Führungsteil (12b) des Riemens (12; 22) einen über 180° abgewinkelten Endteil aufweist, der sich an zwei nahezu parallele gerade Teile anschließt, die je an der Außenseite an einem Führungselement (9, 10) anliegen, wobei die Länge des Führungsteils (12b) durch Änderung der Lage des Endteils in einer Richtung parallel zu den geraden Teilen änderbar ist.

4. Bandtransportvorrichtung nach Anspruch 3, wobei das Band zwischen einer Abwickelhaspel (4) und einer Aufwickelhaspel (5) transportiert wird, dadurch gekennzeichnet, daß der Riemen (12; 22) wenigstens zwei über 180° abgewinkelte Endteile aufweist mit einem ersten (12b) und einem zweiten Führungsteil (12a) zum Führen des Bandes zu den Führungsmittel (9, 10) hin bzw. von denselben weg, wobei die beiden Führungsmittel (12a, 12b) zwischen das Band (3) führenden Führungselementen (13-16) hindurch geführt werden.

5. Bandtransportvorrichtung nach Anspruch 4, dadurch gekennzeichnet, daß der Riemen (22) einen dritten Führungsteil (22b) mit einem über 180° abgewinkelten Endteil aufweist, wobei dieser dritte Führungsteil sich zwischen ersten (29, 30) und zweiten (25, 26) Führungsmitteln befindet.

6. Bandtransportvorrichtung nach Anspruch 4 oder 5, wobei die Bearbeitungsmittel einen Kopfträger (7) mit weningstens einem Magnetkopf (8) zum Abtasten von Information auf einem Magnetband aufweisen und wobei der Magnetkopf (8) mit einer Belagseite des Bandes (3) in Berührung ist, dadurch gekennzeichnet, daß das Band (3) die Führungsteile (12a, 12b) des Riemens (12) ausschließlich mit der Trägerseite berührt.

7. Bandtransportvorrichtung nach Anspruch 6, dadurch gekennzeich-net, daß die beiden Haspeln (4,5) in einer Bandkassette (2) untergebracht sind, deren Gehäuse (18) an den Vorderecken mit zwei Bandumlenkelementen (18a,18b) versehen ist, zwischen denen ein Bandteil (3a) gestrafft ist, wenn die Kasette (2) nicht im Betrieb ist, wobei dieses Gehäuse (18) hinter dem genannten Bandteil (3a) eine Ausnehmung aufweist, die derart geformt ist, daß der endlose Riemen (12) in diese Ausnehmung geführt werden kann, wonach Einfädelmittel der Bandtransportvorrichtung (1) den Bandteil (3a) und den Riemen (12) in Richtung der Antriebsmittel (9,10) aus der Kassette (2) ziehen können um sie in die Betriebslage zu bringen.

8. Bandtransportvorrichtung nach Anspruch 5 zusammen mit Anspruch 6 oder 7, dadurch gekennzeichnet, daß die Bearbeitungsmittel zwei Kopfträger (7a, 7b) aufweisen, die um eine Achse drehen, wobei das Band (3) über die ersten (29,30) bzw. zweiten (25,26) Führungsmittel an den genannten Trägern entlang geführt wird, die radial in einem Abstand voneinander liegen, wobei der dritte Führungsteil (22b) ein Bandpuffer in der Bandstrecke zwischen dem ersten (7a) und dem zweiten Kopfträger (7b) steuert, und wobei der Kopf (8a, 8b) jedes Kopfträgers (7a, 7b) eine zugeordnete halbe Bandbreite abtastet.

9. Bandtransportvorrichtung nach einem der Ansprüche 4 bis 8, wobei die Anriebsmittel eine Bandantriebswelle und eine Anpreßrolle aufweisen, dadurch gekennzeichnet, daß die Bandantriebswelle (17) in Zusammenarbeit mit der Anpreßrolle an der Stelle eines Führungselementes (14) in der Nähe der Stelle, an der das Band (3) in den zweiten Führungsteil (12a) hineingeht, den Riemen (12) unmittelbar antreibt.

10. Bandtransportvorrichtung nach einem der vorstehenden Ansprüche 1 bis 8, dadurch gekennzeichnet, daß die Anriebsmittel mittels eines linearen Getriebes (33) den Riemen (12) unmitelbar antreiben.

11. Bandbearbeitungsapparat, dadurch gekennzeichnet, daß dieser Apparat (6) eine Bandtransportvorrichtung (1) nach Anspruch 1 aufweist.

FIG.1

FIG.2

FIG.3

FIG.4

FIG.5

FIG.6

FIG.7

FIG.8

FIG.9

FIG.10